# EUROPEAN PATENT SPECIFICATION

(11) **EP 1 535 461 B1**
(45) Date of publication and mention of the grant of the patent: **19.05.2010**
(21) Application number: 03792231.7
(22) Date of filing: 25.07.2003
(51) Int. Cl.: H04N 1/32

(54) **LAYOUT PROCESS FOR MULTIMEDIA MESSAGES**
LAYOUT-PROZESS FÜR MULTIMEDIA-NACHRICHTEN
PROCEDE DE MISE EN PAGE POUR MESSAGES MULTIMEDIA

(30) Priority: 08.08.2002 FR 0210072
(43) Date of publication of application: 01.06.2005
(73) Proprietor: Eastman Kodak Company, Rochester NY 14650-2201 (US)
(72) Inventor: FURON, Olivier Alain Christian, Kodak Industrie, F-71102 Chalon sur Saone Cedex (FR); VAU, Jean-Marie, Kodak Industrie, F-71102 Chalon sur Saone Cedex (FR)
(74) Representative: Weber, Etienne Nicolas
(86) International application number: PCT/EP2003/008241
(87) International publication number: WO 2004/019603

(56) References cited:
- EP-A- 0 801 512
- EP-A- 1 085 464
- EP-A- 1 094 656
- EP-A- 1 117 230
- EP-A- 1 152 332
- EP-A- 1 220 530
- BILL CAMARDA: "Special Edition Using Microsoft Word 97" 1997, QUE CORPORATION , INDIANAPOLIS, U.S.A. , XP001152064 ISBN: 0-7897-1398-5 * page 431 * * page 769 - page 771 *
- ALAN SIMPSON: "Mastering WordPerfect 6.1 for Windows" 1995, SYBEX , U.S.A. , XP001152065 ISBN: 0-7821-1626-4 * page 781 * * page 1000 - page 1001 * * page 1066 - page 1069 *

## Description

### FIELD OF THE INVENTION

The present invention is in the field of imaging. The present invention relates more particularly to an automatic layout process for a composite multimedia message, intended to be displayed on a terminal screen, and intended to be printed using a printer capable of communicating with the terminal. The displayed composite multimedia message can comprise entities of image, text and sound (audio). These entities are usually formed from the contents of several initial multimedia messages. The automatic layout is performed from an analysis of the various initial multimedia messages. Such an analysis especially includes characteristics of time, contents, or even context of the images and texts forming the initial messages.

### BACKGROUND OF THE INVENTION

Methods and systems implementing communication means enabling multimedia messages to be transmitted and received by adapting their presentation have been disclosed in the prior art. International Patent Application WO-01,97504 describes a method and system of the MMS type (Multimedia Messaging System) comprising one or more terminals capable of communicating one with another, and linked to one or more printers, via a control means, for example an MMS server. Communication means enable the exchange of a multimedia message containing for example a digital image and text between a first terminal and a second terminal. A request to print the multimedia message, made from the second terminal, is controlled (authorized or not, maximum number of copies, etc.) by the first terminal transmitting the multimedia message.

European Patent Application EP-1,085,464 describes means, and particularly a method to include additional elements of text or additional figurative elements in a digital image capable of being displayed on a terminal, in order to produce a resulting image including these elements. The disclosed means enable the entire multimedia message comprising the resulting image, enriched with the additional elements, to be easy and fun to read and to be interpreted once displayed on a screen. For example, the covering of certain zones or parts of the image with text, should not remove certain entities of the image contents, and thus compromise the overall interpretation or understanding of the displayed message. The method described in European Patent Application EP-1,085,464 enables analysis of the digital image, to recognize and identify an "optimal" zone in said digital image. This optimal zone, also called candidate region, represents the part of the image where an additional element (text, figurative element) is placed. The candidate regions of the image intended to receive these additional elements are regions where the variations of color or gray levels are low, either regions not containing entities or main subjects of interest forming the contents of said image. The method also enables the additional element's placing or color to be modified, so as to optimize the overall presentation of the resulting image for an observer.

European Patent Application EP-1,117,230 describes a method and a system to present, on a terminal display screen, information coming from multimedia components, such as still or animated (video) images, text, or sound (audio). A presentation model (SMIL: synchronized multimedia integration language) is programmed to display a multimedia message according to a configuration preset by compilation files, and corresponding to a programmed format, so as to synchronize the presentation of the various components forming a page of the multimedia message between a terminal transmitting the message and a terminal receiving said message. This programmed format defines zones where an image and a text are displayed respectively, the group forming the multimedia message. If the receiving terminal does not have characteristics suited to present certain components of the message, these are blanked.

The means of the prior art do not enable a display of several multimedia messages to be obtained, for example on a single page.

The document EP-A-1 094 656 describes a method for providing access to multimedia messages for remote users using facsimile machines. A request for multiple messages to be sent by facsimile can be combined into a single facsimile as a response to the multiple requests.

### SUMMARY OF THE INVENTION

It is an object of the present invention to provide a process for the automatic layout on at least one page and the automatic display on a terminal screen of a composite multimedia message formed from several initial multimedia messages.
The object of the invention is achieved by a process according to claim 1.

The layout is performed on one or more pages, the number of said pages being less than the number of initial multimedia messages. This layout is performed especially from an automatic analysis of characteristics specific to the initial multimedia messages, each comprising an image, text or sound entity. This analysis then enables an optimized layout to be determined on one page, or several pages, of a composite multimedia message. The composite multimedia message is determined according to the key characteristics of the contents of each of the initial multimedia messages. This enables not only a display with a single view or a reduced number of views to be obtained, but also the printing cost to be reduced, if printing the resulting composite message is selected. A single page or even just a few pages are produced and contain all the important image and text characteristics of each initial multimedia message.

The composite multimedia message is formed from a selection, made by a user from the terminal keyboard, of at least two initial multimedia messages, and then from an automatic analysis of the contents of the initial multimedia message. The number of pages forming the composite multimedia message is less than the number of initial multimedia messages.

The present invention also enables, after the automatic display of the composite multimedia message, the display of the proposed composite multimedia message to be invalidated manually from the terminal keyboard. In this case the invention method re-enables the automatic layout of the composite multimedia message on at least one page having a second format, and then enables the automatic display of this composite multimedia message on the terminal screen. And so on, iteratively, so long as the composite multimedia message displayed in a given format by the invention method does not suit the user.

The process of the present invention also enables a printing request of the composite multimedia message, validated to a printer that communicates with the terminal, to be transmitted from the terminal keyboard.

Other characteristics and advantages will appear on reading the following description, with reference to the drawings of the various figures.

### BRIEF DESCRIPTION OF THE DRAWINGS

Figure 1 shows an example of a hardware environment used to implement the present invention.
Figure 2 represents a diagram of the operations executed by the invention process.
Figure 3 represents an example of the display of initial multimedia messages on a terminal screen.
Figure 4 represents an example of the display, according to the invention process, of a composite multimedia message on a terminal screen.

### DETAILED DESCRIPTION OF THE INVENTION

The following description is a detailed description of the main embodiments of the invention, with reference to the drawing of each of the various figures.

The present invention relates to a process enabling, from one terminal 12, the automatic layout, on a single page, or even several pages, of one, or more usually, several multimedia messages. Advantageously the number of pages is between one and five. The multimedia message is for example, advantageously, an MMS message (Multimedia Message Service) comprising a digital image, the text associated with said image and a sound or audio message (music or melody). These multimedia messages can thus be exchanged among terminal users functioning in a network. Each of said users being able for example to modify the passing message by adding text to it for example.

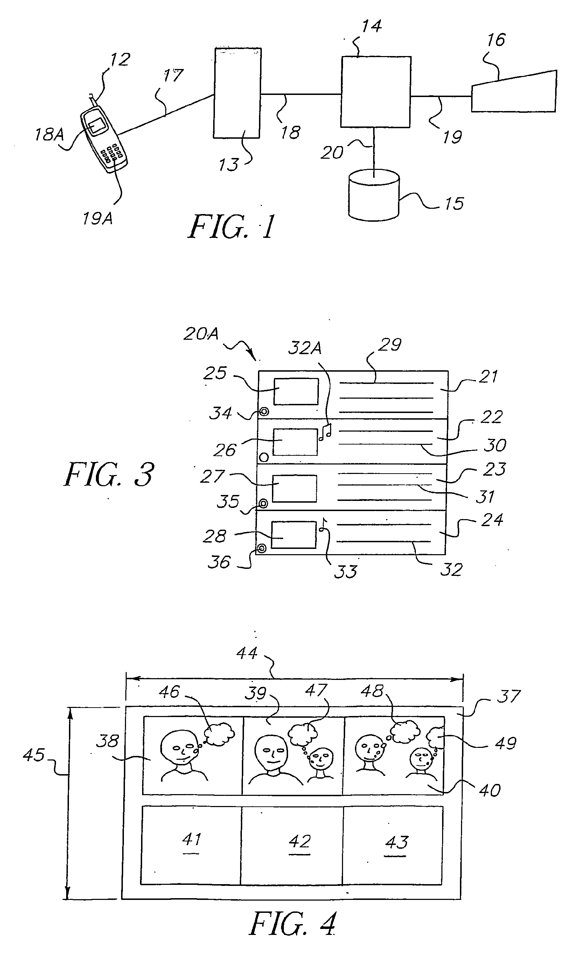

Figure 1 represents diagrammatically a preferred embodiment for implementing the invention. A terminal 12 communicates by a link 17, 18 with a server 14. The server 14 communicates, by a link 20, with an image database 15.
The image database 15 stores or saves for example previously recorded high-resolution digital images. The server 14 communicates, by a link 19, with a printer 16. The printer 16 is for example a printer using specific paper (support) enabling it to produce high quality images; this type of printer, for example inkjet, thermal, laser or photographic, is commonly used in digital photographic processing laboratories (minilabs). Other image supports, used in online printing services, can be used: T-shirts, identity photographs, etc. The terminal 12 is preferably a mobile terminal: for example a cellphone equipped with a keyboard 19A and a display screen 18A, a cellphone equipped with a camera module (phone cam) enabling digital shots to be recorded, or a digital camera equipped with a GSM/GPRS or 3G type cell modem (wireless cam) enabling digital photographs to be downloaded from a remote online album. In the preferred embodiment where the terminal 12 is a mobile terminal which operates for example on a GSM type network (Global System for Mobile), a gateway 13 enables communications between this terminal 12, the server 14 and the image database 15 to be administered. The gateway 13, for example of WAP type (Wireless Application Protocol) enables communication, represented by the link 17, between the terminal 12 and the network, for example GSM. The present invention can be implemented in an Internet environment. That is, in a preferred embodiment using a mobile terminal 12 for example of "phone cam" type, this terminal 12 is capable of communicating with an Internet type network. A user who wishes for example to access from the terminal 12, one or more images contained in the database 15 linked for example, via the link 18, to Internet, transmits a message in the appropriate protocol, for example WAP, intended for a telephone line. The message transits by the gateway 13, where it is transformed into a message according to the HTTP protocol (Hypertext Transfer Protocol), used in the Internet. Thus the user can recover and display on their terminal screen, one or more images coming from the database 15.

In a particular embodiment, if the terminal 12 is for example of the "phone cam" type, the shots are taken directly from the terminal 12, and saved or stored in a memory of said terminal 12. In this case, the images have for example a VGA type resolution (Video Graphics Array) of 640 by 480 pixels.

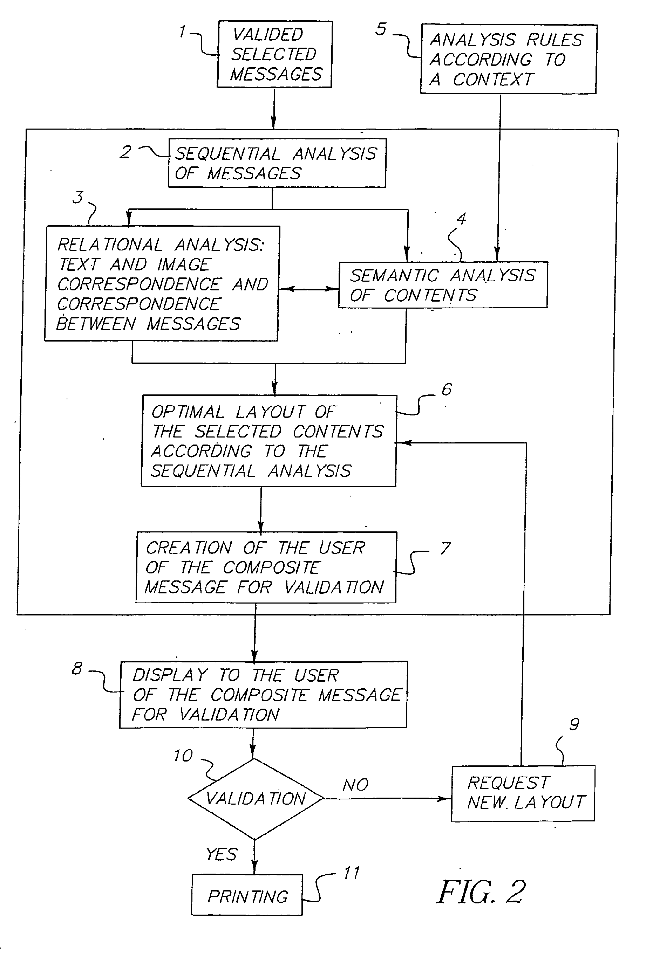

According to Figure 2, a user of the terminal 12 manually displays, from the terminal keyboard 12, several initial multimedia messages. An initial multimedia message comprises a digital image, and either at least one text message and/or one sound message. This sound message comprises audio data, for example known music or a melody. The digital image contained in the multimedia message can be still or animated (video clip). The audio data are saved in sound files, for example on the server 14. According to the size and capacity of the display screen of the terminal 12, one or more initial messages are displayed on one page of said screen.

In a first embodiment, the method of displaying the initial multimedia messages can be reduced to the display of successive lines, giving simply: "message 1", "message 2", etc. By clicking on "message 1", the corresponding multimedia message then appears on the screen in the form for example of an image (image zone 25, 26, 27, 28) under which one or more texts appear (text zone 29, 30, 31, 32). The text zone 29, 30, 31, 32 can also appear above or beside the image zone. The text zone 29, 30, 31, 32 explicitly gives one or more texts inherent to the image; this is case when the texts are relatively short, that is are only composed of a few words or expressions. Or the text zone 29, 30, 31, 32 gives lines of the type "text 1", "text 2", etc., and the user explicitly makes the corresponding text appear by clicking "text 1", "text 2", etc.

In a second embodiment, and according to Figure 3, initial multimedia messages 21, 22, 23, 24 appear, one under the other, as a page 20A displayed on the screen 18A. The page of screen 20 has for example four messages. Each of these initial multimedia messages 21, 22, 23, 24 comprises an image zone 25, 26, 27, 28, a text zone 29, 30, 31, 32, and a sound zone 32A, 33; the sound zone 32A, 33 indicates that a sound message is associated with said initial multimedia message 22, 24. Each of the images 25, 26, 27, 28 is displayed for example with low resolution enabling the contents of said image to be viewed. The text zone can show, as in the first embodiment presented above, either a shortened text (e.g. "text 1", "text 2", etc.), or the explicit display of the text associated with the image of the initial multimedia message. In the special case where a sound message is associated with the initial multimedia message 22, 24, an icon or distinguishing symbol 32A, 33 is displayed; this distinguishing symbol is for example a musical note. If the user wishes to select more than four messages, they use the keyboard 19A to scroll the other initial multimedia messages.

According to Figures 2 and 3, the user manually selects, using the keyboard 19A of terminal 12, one or more of these displayed messages from the display of these initial multimedia messages 21, 22, 23, 24. According to a particular embodiment, the selection is made using the keyboard 19A of the terminal 12, for example by pointing to the selected messages 21, 23, 24, by clicking on a special zone 34, 35, 36 specific to each of said messages. The selected messages 21, 23, 24 make up for example a story, said messages having been transmitted successively in time by different transmitters. When the user has selected a plurality of initial multimedia messages, he validates the selection 1 thus made, by using for example a menu specific to the invention method, and which is displayed on the screen 18A of the terminal 12. An instruction, for example of the type "message for layout", is proposed in this menu. The invention process then enables the automatic analysis of the initial multimedia messages selected for layout. The resulting data of this analysis are automatically saved. The analysis is performed by the algorithm used to implement the invention process. This algorithm comprises a series of instructions represented diagrammatically in Figure 2. In a preferred embodiment, the application or program specific to the invention process is installed on the terminal 12; in this embodiment for example a terminal of the type NOKIA™ 7650 with code developed in Java or C++ is used. But, in another embodiment, the program can also be installed on the server 14. A first step of the analysis consists in automatically performing a sequential analysis 2 of each selected and validated initial multimedia message. This sequential analysis 2 enables the characterization, in time of the data corresponding to the moment when the initial multimedia message is created, the moment when the message is sent, the moment when the message is received, the identification of the transmitter of the message, the identification of the receiver of said message. According to this embodiment, the analyzed sequential data are saved either to a memory of the terminal 12, or to a memory of the server 14.

A second step of the analysis consists in automatically performing a semantic analysis 4 of the initial multimedia message. This semantic analysis is an analysis of the entire contents of the initial multimedia message: Image, text, sound or voice inherent to the message contents. The algorithm of the invention method enables for example only part of an initially rather long text to be kept for later layout, while keeping the meaning of the text, using keywords of said text. According to this embodiment, the analyzed semantic data are saved either to a memory of the terminal 12, or to a memory of the server 14.

In another embodiment of the invention, the step of automatic analysis and recording of semantic data is performed before the step of automatic analysis and recording of sequential data.

A third step of the analysis consists in automatically performing a relational analysis 3 between the selected initial multimedia messages. The algorithm of the invention process enables links or correspondences to be established between images, texts and sounds forming each of the various selected initial multimedia messages 21, 23, 24 respectively. The relational analysis is performed using all the previously saved sequential and semantic data. This relational analysis enables relational data to be established that correspond to links or correspondences that exist between the respective contents of each of the selected initial multimedia messages, and are linked to the respective meaning of each of said messages; this enables the automatic determination, by using the sequential and semantic data, of the relational data that weigh the existing relationship level between each of the selected initial messages. The relational data are saved either to a memory of the terminal 12, or to a memory of the server 14.

The algorithm of the invention process uses all the saved sequential, semantic and relational data to automatically determine at least one transformed multimedia message 38, 39, 40, 41, 42, 43. According for example to the existing relationship level between two initial multimedia messages, the algorithm of the invention process enables resizing, zooming, only keeping one region or zone of interest (e.g. a face) of the respective images of each of said initial messages, and/or only keeping one part of the text or text parts forming said initial messages. In an embodiment where the multimedia message comprises an image that is a video clip, the invention process enables the determination for example of a key image of said video clip; this key image is then processed by the invention process to be included in a composite multimedia message.

The invention process thus enables the determination of a multimedia message that is a transformation of the initial multimedia message, because only the key parts of the initial messages are kept. This transformation 6 has a predictive objective, aiming especially to optimize later layout. Naturally, not all the selected initial multimedia messages 21, 23, 24 are necessarily transformed. The transformed multimedia message 38, 39, 40, 41, 42, 43 can be identical, in overall contents (image, text and sound), to the selected initial multimedia messages 21, 23, 24. After this transformation step, the number of transformed multimedia messages is equal to the number of initial multimedia messages. All said transformed messages constitute the composite multimedia message.

According to Figure 4, the invention process then automatically lays out 7, on at least one page 37 having a given format, the composite multimedia message, formed from each transformed multimedia message. Figure 4 illustrates for example a layout of six selected multimedia messages 38, 39, 40, 41, 42, 43. Then the composite multimedia message is displayed automatically 8 on the terminal screen 12, according to a format given by the invention process. Figure 4 illustrates an example in which the invention process lays out six multimedia messages on a single page 37. This means that either only six multimedia messages were previously selected and validated, and then laid out on this page 37, or a larger number of messages, for example ten, twelve or eighteen were selected and validated. If ten messages are selected and validated, the invention process, according to the automatic analysis of these messages, and programmed formats, lays out and displays for example six messages on a first page 37, and then four messages on a second page 37. If twelve messages are selected and validated, the invention process, according to the automatic analysis of these messages, and programmed formats, lays out and displays for example six messages on a first page 37, and then six messages on a second page 37. If eighteen messages are selected and validated, the invention process, according to the automatic analysis of these messages, and programmed formats, lays out and displays for example six messages on a first page 37, six messages on a second page 37, and six messages on a third page 37. When the composite multimedia message is laid out and displayed on several pages 37, the display of each of said pages 37 on the screen 18, can be performed manually, by using the keyboard 19A of the terminal 12. But, in an advantageous embodiment of the invention, the display of several pages 37 is performed automatically according to a set display time, for example ten or fifteen seconds display per page. The display time is advantageously set for each page, or the display time is set globally for a group of pages, each of said pages being displayed automatically for a time virtually equal to a sub-multiple of the global set time. The display time can be modified from the keyboard 19A. The format,
characterized by its width 44 and its height 45, is selected automatically by the invention method, according to initially programmed format data. The size ratio characterizes for example the ratio between the height and width of the format. The composite multimedia message is displayed as an image (image format), that is as a bitmap file (pixels). According to the drawings illustrating Figure 4, and according to messages 38, 3 9, 40, the displayed image represents for example one or more people's faces, and the texts that correspond to verbal exchanges among said people are displayed in specific zones 46, 47, 48, 49; these zones 46, 47, 48, 49 are represented for example, in the image, as balloons. If the displayed composite multimedia message 37 suits the user of the terminal 12 having requested the layout, said user manually validates 10 the proposed display, from the keyboard 19 of the terminal 12. The invention process also enables the user, from for example a menu displayed on the screen of the terminal 12, to perform a printing request 11 of the validated composite multimedia message. According to Figure 1, a printer 16 produces the composite multimedia message, for example on a sheet of photographic paper, in a format whose size ratio is identical to the size of the automatic layout. The invention process thus enables a number of printing sheets less than the number of initial multimedia messages to be produced, all said messages telling for example a story. Savings of printing paper are thus advantageously made.

In a particular embodiment, the invention process also enables the transformed multimedia message to determined by using analysis rules 5 that depend on a context linked to the multimedia message. These analysis rules 5 are included in the algorithm, and enable instructions to be executed that add to the semantic analysis of the message, and that influence the presentation of the transformed multimedia message, and thus the layout, according to the nature of said message: professional context (property, insurance, police, etc.), holidays, family, night-environment, etc. The analysis rules are worked out according to the most likely events occurring in each context. These most likely events enable for example the characterization of the image entities to be kept in order to determine the transformed multimedia message, or for example the keywords to be kept in order to form the texts of the transformed multimedia message.

The object of the algorithm of the invention process is to optimize the layout of the group of selected initial multimedia messages, in order to form a composite multimedia message, according to the available programmed formats. However, if the user decides to invalidate the layout, the invention process enables another layout 9 to be performed automatically, by using a second format, different than the first format corresponding to the invalidated layout. The user has the choice of validating 10 this second layout, or continuing to invalidate it. The invention process enables a third layout to be performed automatically, according to a third format different than the first and second formats. Invalidation can be so repeated, iteratively, so long as different programmed formats are available that have not been used to perform an automatic layout. In other words, if the number of programmed formats in the invention process is "n", "n" being an integer, the invention process enables the layouts automatically determined by the invention process to be invalidated "n" times. Once all the available programmed formats have been invalidated, the invention process proposes the first invalidated format to the user again, then the second, etc. In this case, the user only has the option of validating the format, from the "n", that suits them best. In the preferred embodiment of the invention, the number of programmed formats is between one and ten. However, there is no upper limit of "n" to implement the invention process.

While the invention has been described with reference to its preferred embodiments, it is clear that variants and modifications can be produced within the scope of the claims.

## Claims

1. A process to provide an automatic layout of a composite multimedia message on at least one page (37) and an automatic display on a screen (18A) of a terminal (12) of the at least one page (37), the process comprising forming the composite multimedia message from a selection, performed from a keyboard (19A) of the terminal (12), of a number of at least two initial multimedia messages (21), (23), (24), and then, from an automatic analysis of the contents of the at least two initial multimedia messages selected, automatically forming with programmed formats the composite multimedia message on the at least one page (37) with a number of page(s) (37) less than the number of the at least two selected initial multimedia messages (21), (23), (24), and automatically displaying on the terminal screen (18A) the at least one page (37) of the composite multimedia message formed; the process being **characterized in that** the automatic analysis of the content of each selected multimedia message (21), (23), (24) comprises the following steps:
a) automatically analyze and record sequential data (2) of each selected initial multimedia message (21), (23), (24);
b) automatically analyze and record semantic data (4) of each selected initial multimedia message (21), (23), (24);
c) automatically determine and record relational data (3) between the selected initial multimedia messages (21), (23), (24), from the sequential and semantic data; and **in that** automatically forming and automatically displaying the composite multimedia message comprises furthermore the following steps:
d) automatically determine (6), according to recorded relational data (3), transformed multimedia messages (38), (39), (40), (41), (42), (43);
e) automatically layout (7) on the at least one page (37) having a first format, the composite multimedia message formed from the transformed multimedia messages (38), (39), (40), (41), (42), (43);
f) automatically display (8) the composite multimedia message on the terminal screen (18A) while keeping the dimensional ratio of the first format.

2. The process according to Claim 1, **characterized in that** the selection of the at least two initial multimedia messages (21), (23), (24) comprises the following steps:
a) manually display on the screen (18A), from the keyboard (19A) of the terminal (12), a plurality of initial multimedia messages (21), (22), (23), (24);
b) manually select, from the keyboard (19), the at least two initial multimedia messages (21), (23), (24) from the plurality of displayed initial multimedia messages (21), (22), (23), (24);
c) manually validate (1) the selection made in step b).

3. The process according to Claim 1, **characterized in that** the step of automatic analysis and recording of semantic data (4) is performed before the step of automatic analysis and recording of sequential data (2).

4. The process according to Claim 1, **characterized in that** the display of several pages (37) is performed by displaying successively said pages (37) on the screen (18A) of the terminal (12) manually from the keyboard (19A), or automatically according to a set display time.

5. The process according to Claim 1, **characterized in that** it comprises furthermore, after the automatic display of the composite multimedia message, the steps of manually invalidate (10), from the terminal keyboard, the layout of the composite multimedia message, and automatically performing an other layout according to a second format.

6. The process according to Claim 5, **characterized in that** the invalidation is performed n times, n being a number of available different formats enabling layout of the composite multimedia message to be performed.

7. The process according to Claim 5, **characterized in that** n is an integer between one and ten.

8. The process according to Claim 2, **characterized in that** the selected initial multimedia message (21), (23), (24) comprises a digital image (25), (27), (28).

9. The process according to Claim 2, **characterized in that** the selected initial multimedia message (21), (23), (24) comprises a digital image (25), (27), (28) and at least one text message (29), (31), (32).

10. The process according to Claim 2, **characterized in that** the selected initial multimedia message (21), (23), (24) comprises a digital image (25), (27), (28), at least one text message (29), (31), (32) and audio data (33).

## Patentansprüche

1. Verfahren zum Bereitstellen eines automatischen Layouts einer zusammengesetzten Multimedia-Nachricht auf mindestens einer Seite (37) und einer automatischen Anzeige der mindestens einen Seite (37) auf einem Bildschirm (18A) eines Datenendgeräts (12), wobei das Verfahren die Schritte umfasst: Erstellen der zusammengesetzten Multimedia-Nachricht anhand einer mittels einer Tastatur (19A) des Datenendgeräts (12) durchgeführten Auswahl einer Anzahl von mindestens zwei ersten Multimedia-Nachrichten (21), (23), (24) und dann anhand einer automatischen Analyse des Inhalts der mindestens zwei ausgewählten ersten Multimedia-Nachrichten das automatische Erstellen der zusammengesetzten Multimedia-Nachricht mit programmierten Formaten auf der mindestens einen Seite (37) aus einer Anzahl von Seiten (37), die kleiner ist als die Anzahl der mindestens zwei ausgewählten ersten Multimedia-Nachrichten (21), (23), (24), und auf dem Bildschirm (18A) des Datenendgeräts das automatische Anzeigen der mindestens einen Seite (37) der erstellten zusammengesetzten Multimedia-Nachricht; wobei das Verfahren **dadurch gekennzeichnet ist, dass** die automatische Analyse des Inhalts einer jeden ausgewählten Multimedia-Nachricht (21), (23), (24) folgende Schritte umfasst:
a) automatisches Analysieren und Aufzeichnen sequentieller Daten (2) einer jeden ausgewählten ersten Multimedia-Nachricht (21), (23), (24);
b) automatisches Analysieren und Aufzeichnen semantischer Daten (4) einer jeden ausgewählten ersten Multimedia-Nachricht (21), (23), (24);
c) automatisches Bestimmen und Aufzeichnen relationaler Daten (3) von ausgewählten ersten Multimedia-Nachrichten (21), (23), (24) anhand der sequentiellen und semantischen Daten;
und dass das automatische Erstellen und das automatische Anzeigen der zusammengesetzten Multimedia-Nachricht zudem die folgenden Schritte umfasst :
d) automatisches Bestimmen (6) umgewandelter Multimedia-Nachrichten (38), (39), (40), (41), (42), (43) gemäß aufgezeichneter relationaler Daten (3);
e) auf der mindestens einen Seite (37) mit einem ersten Format automatisches Erstellen eines Layouts (7) für die zusammengesetzte Multimedia-Nachricht, die aus den umgewandelten Multimedia-Nachrichten (38), (39), (40), (41), (42), (43) besteht;
f) automatisches Anzeigen (8) der zusammengesetzten Multimedia-Nachricht auf dem Bildschirm (18A) des Datenendgeräts unter gleichzeitiger Beibehaltung des dimensionalen Verhältnisses des ersten Formats.

2. Verfahren nach Anspruch 1, **dadurch gekennzeichnet, dass** die Auswahl der mindestens zwei ersten Multimedia-Nachrichten (21), (23), (24) die folgenden Schritte umfasst:
a) auf dem Bildschirm (18A) manuelles Anzeigen einer Vielzahl erster Multimedia-Nachrichten (21), (22), (23), (24) mittels der Tastatur (19A) des Datenendgeräts (12);
b) mittels der Tastatur (19) manuelles Auswählen der mindestens zwei ersten Multimedia-Nachrichten (21), (23), (24) aus der Vielzahl angezeigter erster Multimedia-Nachrichten (21), (22), (23), (24);
c) manuelles Bestätigen (1) der in Schritt b) getätigten Auswahl.

3. Verfahren nach Anspruch 1, **dadurch gekennzeichnet, dass** der Schritt des automatischen Analysierens und Aufzeichnens semantischer Daten (4) vor dem Schritt des automatischen Analysierens und Aufzeichnens sequentieller Daten (2) erfolgt.

4. Verfahren nach Anspruch 1, **dadurch gekennzeichnet, dass** die Anzeige mehrerer Seiten (37) durch nacheinander erfolgendes Anzeigen dieser Seiten (37) auf dem Bildschirm (18A) des Datenendgeräts (12) entweder manuell mittels der Tastatur (19a) erfolgt, oder automatisch gemäß einer festgelegten Anzeigezeit.

5. Verfahren nach Anspruch 1, **dadurch gekennzeichnet, dass** es nach der automatischen Anzeige der zusammengesetzten Multimedia-Nachricht zudem die Schritte des manuellen Aufhebens (10) des Layouts der zusammengesetzten Multimedia-Nachricht mittels der Tastatur des Datenendgeräts umfasst sowie die automatische Erstellung eines anderen Layouts gemäß einem zweiten Format.

6. Verfahren nach Anspruch 5, **dadurch gekennzeichnet, dass** die Aufhebung n-mal erfolgt, wobei n eine Anzahl zur Verfügung stehender unterschiedlicher Formate ist, die ein Layout der zusammengesetzten Multimedia-Nachricht zu erstellen vermögen.

7. Verfahren nach Anspruch 5, **dadurch gekennzeichnet, dass** n eine ganze Zahl zwischen 1 und 10 ist.

8. Verfahren nach Anspruch 2, **dadurch gekennzeichnet, dass** die ausgewählte erste Multimedia-Nachricht (21), (23), (24) ein digitales Bild (25), (27), (28) umfasst.

9. Verfahren nach Anspruch 2, **dadurch gekennzeichnet, dass** die ausgewählte erste Multimedia-Nachricht (21), (23), (24) ein digitales Bild (25), (27), (28) und mindestens eine Text-Nachricht (29), (31), (32) umfasst.

10. Verfahren nach Anspruch 2, **dadurch gekennzeichnet, dass** die ausgewählte erste Multimedia-Nachricht (21), (23), (24) ein digitales Bild (25), (27), (28), mindestens eine Text-Nachricht (29), (31), (32) sowie Audiodaten (33) umfasst.

## Revendications

1. Procédé permettant la mise en page automatique d'un message multimédia composite sur au moins une page (37) et l'affichage automatique de ladite au moins une page (37) sur l'écran (18A) d'un terminal (12), le procédé comprenant la formation du message multimédia composite à partir d'une sélection, opérée à partir du clavier (19A) du terminal (12), d'au moins deux messages multimédia initiaux (21), (23), (24), puis, à partir d'une analyse automatique du contenu des au moins deux messages multimédia initiaux sélectionnés, la formation automatique à l'aide des formats programmés du message multimédia composite sur la au moins une page (37) avec un nombre de page(s) (37) inférieur au nombre des au moins deux messages multimédia initiaux sélectionnés (21), (23), (24), et l'affichage automatique sur l'écran du terminal (18A) de la au moins une page (37) du message multimédia composite formé ; le procédé étant **caractérisé en ce que** l'analyse automatique du contenu de chaque message multimédia sélectionné (21), (23), (24) comprend les étapes suivantes :
a) l'analyse et l'enregistrement automatiques des données séquentielles (2) de chaque message multimédia initial sélectionné (21), (23), (24) ;
b) l'analyse et l'enregistrement automatiques des données sémantiques (4) de chaque message multimédia initial sélectionné (21), (23), (24) ;
c) la détermination et l'enregistrement automatiques des données relationnelles (3) entre les messages multimédia initiaux sélectionnés (21), (23), (24) à partir des données séquentielles et sémantiques ;
et **en ce que** la formation et l'affichage automatiques du message multimédia composite comprend, en outre, les étapes suivantes :
d) la détermination automatique (6), selon les données relationnelles enregistrées (3), des messages multimédia transformés (38), (39), (40), (41), (42), (43) ;
e) la mise en page automatique (7) sur la au moins une page (37) ayant un premier format, du message multimédia composite formé à partir des messages multimédia transformés (38), (39), (40), (41), (42), (43) ;
f) l'affichage automatique (8) du message multimédia composite sur l'écran du terminal (18A) tout en conservant le rapport dimensionnel du premier format.

2. Procédé selon la revendication 1, **caractérisé en ce que** la sélection des au moins deux messages multimédia initiaux (21), (23), (24) comprend les étapes suivantes :
a) l'affichage manuel à l'écran (18A), à l'aide du clavier (19A) du terminal (12), d'une pluralité de messages multimédia initiaux (21), (22), (23), (24) ;
b) la sélection manuelle, à l'aide du clavier (19), des au moins deux messages multimédia initiaux (21), (23), (24) dans la pluralité de messages multimédia initiaux affichés (21), (22), (23), (24) ;
c) la validation manuelle (1) de la sélection effectuée à l'étape b).

3. Procédé selon la revendication 1, **caractérisé en ce que** l'étape d'analyse et d'enregistrement automatiques des données sémantiques (4) est réalisée avant l'étape d'analyse et d'enregistrement automatiques des données séquentielles (2).

4. Procédé selon la revendication 1, **caractérisé en ce que** l'affichage de plusieurs pages (37) est réalisé en affichant successivement lesdites pages (37) sur l'écran (18A) du terminal (12), manuellement à l'aide du clavier (19A) ou automatiquement selon un temps d'affichage fixé.

5. Procédé selon la revendication 1, **caractérisé en ce qu'**il comprend en outre, après l'affichage automatique du message multimédia composite, les étapes d'annulation manuelle (10), à l'aide du clavier du terminal, de la mise en page du message multimédia composite, et de réalisation automatique d'une autre mise en page selon un deuxième format.

6. Procédé selon la revendication 5, **caractérisé en ce que** l'annulation est réalisée n fois, n étant un nombre de formats différents disponibles pour réaliser la mise en page du message multimédia composite.

7. Procédé selon la revendication 5, **caractérisé en ce que** n est un nombre entier de un à dix.

8. Procédé selon la revendication 2, **caractérisé en ce que** le message multimédia initial sélectionné (21), (23), (24) comprend une image numérique (25), (27), (28).

9. Procédé selon la revendication 2, **caractérisé en ce que** le message multimédia initial sélectionné (21), (23), (24) comprend une image numérique (25), (27), (28) et au moins un message textuel (29), (31), (32).

10. Procédé selon la revendication 2, **caractérisé en ce que** le message multimédia initial sélectionné (21), (23), (24) comprend une image numérique (25), (27), (28), au moins un message textuel (29), (31), (32) et des données audio (33).
